# EUROPEAN PATENT APPLICATION

(11) **EP 4 838 375 A1**
(43) Date of publication of application: **11.11.2026**
(21) Application number: 26177344.4
(22) Date of filing: 07.05.2026
(51) Int. Cl.: G06F 16/242, G06F 16/334, G06F 40/30

(54) **INDEX-BASED RETRIEVAL TECHNIQUES FOR RETRIEVAL-AUGMENTED GENERATION**

(30) Priority: 09.05.2025 US 202519204100
(71) Applicant: Visa International Service Association, San Francisco, California 94128 (US)
(72) Inventor: DAS, Kriti Ranjan, 534074 Singapore (SG); SEOW, Hong Yang, 520273 Singapore (SG); TOO, Wei Jian Daryln, 510741 Singapore (SG); RAO, Nishantha Thantya, 529948 Singapore (SG); CHINGAKHAM, Thoithoi, 437885 Singapore (SG); PAVITHRAN, Jijin, 763672 Singapore (SG)
(74) Representative: EIP

(57) **Abstract**

A computer-implemented method includes receiving a natural language query that specifies a plurality of categories and data elements, and providing, to a Large Language Model (LLM), a first prompt comprising the natural language query and context metadata characterizing the categories and the data elements in a dataset. The context metadata comprises key-value pairs, where the keys include categories in the dataset, and the values include corresponding data elements in the dataset. The LLM outputs keywords identified in the natural language query based on the context metadata. One or more entries in the dataset are identified that contain data elements corresponding to the keywords. A second prompt comprising the received natural language query, the keywords, and one or more indexes to the one or more identified entries in the dataset is provided to the LLM, which outputs a generated output based on the identified entries in the dataset.

## Description

### BACKGROUND

Artificial intelligence (AI) and Machine Learning (ML) models are popularly used to perform various tasks. The advent of Large Language Models (LLMs) such as ChatGPT extends the usefulness of these models. LLMs are AI models trained on vast amounts of text data to understand and generate human-like language. LLMs can perform various Natural Language Processing (NLP) tasks such as text generation, summarization, and translations.

Retrieval-Augmented Generation (RAG) enhances LLMs by integrating external knowledge retrieval. While generally the knowledge of an LLM is frozen at training time, using RAG can augment the LLM's knowledge using selected datasets. RAG allows the LLM to fetch up-to-date and/or domain-specific information before generating responses.

RAG and LLM techniques suffer from problems such as hallucinations, long convergence times, and high power usage. Embodiments of the disclosure address this problem and other problems individually and collectively.

### SUMMARY

Embodiments are directed to techniques for generating LLM output satisfying several criteria based on natural language input and a large dataset.

In some embodiments, a method comprises receiving, by a server computer, a natural language query that specifies a plurality of categories and data elements; providing, by the server computer to a Large Language Model (LLM), a first prompt comprising the received natural language query and context metadata characterizing the categories and the data elements in a dataset, wherein the context metadata comprises a set of key-value pairs, where the keys include categories in the dataset, and the values include corresponding data elements in the dataset; outputting, by the LLM, a plurality of keywords identified in the natural language query based on the context metadata; identifying, by the server computer, one or more entries in the dataset that contain data elements corresponding to one or more of the plurality of keywords; providing, by the server computer to the LLM, a second prompt comprising the received natural language query, the keywords, and one or more indexes to the one or more identified entries in the dataset; and outputting, by the LLM, a generated output that is based on the one or more identified entries in the dataset.

In some aspects, identifying the one or more entries in the dataset that contain data elements corresponding to one or more of the plurality of keywords comprises executing K-Nearest Neighbor (KNN) to identify the one or more entries in the dataset.

In some aspects, the one or more entries includes two or more entries corresponding to two or more of the plurality of keywords; and the method further comprises: ranking the two or more entries based on the presence of the two or more of the plurality of keywords; and selecting at least a highest-ranked entry, the index of which is then provided to the LLM. In some aspects, the ranking comprises executing a recursive search on the indexes and the keywords.

In some aspects, the method further comprises causing display of the generated output on a display component of a remote computing device; or causing speech output to be played via a speaker component of a remote computing device.

In some aspects, the method further comprises receiving, by the server computer, raw data; parsing, by the server computer, the raw data to identify categories and data elements therein; and generating, by the server computer, the dataset, including mapping the categories to the data elements in the key-value pairs.

In some aspects, the raw data comprises hexadecimal data. In some aspects, the raw data comprises International Organization for Standardization (ISO) 8583 data.

In some aspects, the method further comprises generating, by the server computer, supplemental keys paired to the index of the corresponding data entry to generate supplemental key-value pairs; vectorizing, by the server computer, the supplemental key-value pairs; and storing, by the server computer, the vectorized supplemental key-value pairs, where the server computer uses the stored vectorized supplemental key-value pairs to prepare the second query.

In some aspects, a system (e.g., a server computer) comprises one or more processors; and one or more computer readable media comprising code executable by one or more processors to perform any of the above methods. In some aspects, a server computer comprises one or more processors; and one or more computer readable media comprising code executable by the one or more processors to perform a method comprising: receiving a natural language query that specifies a plurality of categories and data elements; providing, to a Large Language Model (LLM), a first prompt comprising the received natural language query and context metadata characterizing the categories and the data elements in a dataset; outputting, by the LLM, a plurality of keywords identified in the natural language query based on the context metadata; identifying one or more entries in the dataset that contain data elements corresponding to one or more of the plurality of keywords; providing, to the LLM, a second prompt comprising the received natural language query, the keywords, and one or more indexes to the one or more identified entries in the dataset; and outputting, by the LLM, a generated output that is based on the one or more identified entries in the dataset.

In some aspects, a non-transitory computer-readable medium comprises instructions that, when executed by one or more processors, cause performance of any of the above methods. In some aspects, a non-transitory computer-readable medium comprising instructions that, when executed by one or more processors, cause performance of a method comprising: receiving a natural language query that specifies a plurality of categories and data elements; providing, to a Large Language Model (LLM), a first prompt comprising the received natural language query and context metadata characterizing the categories and the data elements in a dataset; outputting, by the LLM, a plurality of subqueries based on the natural language query and the context metadata; executing, on the dataset, each of the plurality of subqueries to obtain a plurality of subquery results; identifying one or more entries in the dataset that satisfy the plurality of subqueries; providing, to the LLM, a second prompt comprising the received natural language query and one or more indexes to the one or more identified entries in the dataset; and outputting, by the LLM, a generated output that is based on the one or more identified entries in the dataset.

These and other embodiments are described in further detail below.

### BRIEF DESCRIPTION OF THE DRAWINGS

FIG. 1 shows an example system and simplified flow for index-based RAG according to various embodiments.
FIG. 2 shows a server computer according to various embodiments.
FIG. 3 shows a user computing device according to various embodiments.
FIG. 4 is a flow chart showing a process for dataset creation according to various embodiments.
FIG. 5 is a flow chart showing a process for indexing and vectorization according to various embodiments.
FIG. 6 is a flow chart showing a process for retrieval and generation according to various embodiments.
FIG. 7 is a schematic diagram illustrating an example data structure that can be implemented according to various embodiments.
FIG. 8 shows an example of context metadata according to various embodiments.

### DETAILED DESCRIPTION

Prior to discussing embodiments of the disclosure, some terms can be described in further detail.

A "server" or "server computer" may include a powerful computer or cluster of computers. For example, the server can be a large mainframe, a minicomputer cluster, or a group of servers functioning as a unit. In one example, the server may be a database server coupled to a Web server. The server may comprise one or more computational apparatuses and may use any of a variety of computing structures, arrangements, and compilations for servicing the requests from one or more client computers.

A "user computing device" may include a device operable by a user. A user device may provide communication capabilities including communication over a mobile phone (wireless) network, wireless data network (e.g., 3G, 4G, or similar networks), Wi-Fi, Wi-Max, or any other communication medium that may provide access to a network such as the Internet or a private network. Examples of user devices include laptop computers, desktop computers, mobile phones (e.g., cellular phones), PDAs, tablet computers, net books, etc. A user computing device may comprise any suitable hardware and software for performing such functions, and may also include multiple devices or components (e.g., when a device has remote access to a network by tethering to another device-i.e., using the other device as a relay-both devices taken together may be considered a single user device).

The term "artificial intelligence model" or "AI model" may refer to a model that may be used to predict outcomes in order to achieve a target goal. The AI model may be developed using a learning algorithm, in which training data is classified based on known or inferred patterns. An AI model may also be referred to as a "machine learning model."

A "machine learning model" may include an application of artificial intelligence that provides systems with the ability to automatically learn and improve from experience without explicitly being programmed. A machine learning model may include a set of software routines and parameters that can predict an output of a process (e.g., identification of an attacker of a computer network, authentication of a computer, a suitable recommendation based on a user search query, etc.) based on a "feature vector" or other input data. A structure of the software routines (e.g., number of subroutines and the relation between them) and/or the values of the parameters can be determined in a training process, which can use actual results of the process that is being modeled, e.g., the identification of different classes of input data. Examples of machine learning models include support vector machines, models that classify data by establishing a gap or boundary between inputs of different classifications, as well as neural networks, collections of artificial "neurons" that perform functions by activating in response to inputs.

An "LLM," or "Large Language Model," is a sophisticated artificial intelligence system designed to process, understand, and generate human-like text based on vast amounts of data. These models are built using advanced machine learning techniques, such as deep learning, and are trained on diverse datasets that encompass languages, contexts, and domains. This allows LLMs to perform a variety of tasks, including answering questions, drafting documents, translating languages, summarizing content, and engaging in conversations. Their versatility and ability to generate coherent, context-aware responses make them invaluable tools for businesses, researchers, and individuals seeking efficient and scalable solutions for communication and problem-solving.

"Retrieval-Augmented Generation" or "RAG" is an advanced technique in artificial intelligence that combines the strengths of large language models (LLMs) with external information retrieval systems. In RAG, the AI integrates real-time access to databases, documents, or other knowledge sources to supplement its generative capabilities. Instead of relying solely on pre-trained data, RAG retrieves relevant information from external sources and uses it to produce more accurate, contextually relevant, and up-to-date responses. This approach is particularly useful for tasks requiring specific or dynamic knowledge, such as generating detailed reports, answering domain-specific questions, or providing fact-based content. By blending retrieval and generation, RAG enhances the AI's reliability and adaptability, making it a powerful tool for applications across industries.

A "transaction" can be a reciprocal action, effect, or influence. Example interactions include a transaction between two parties and a data exchange between two devices. In some embodiments, a transaction can include a payment transaction in which two devices can interact to facilitate a payment. A transaction may involve the exchange of monetary funds or the exchange of goods or services for monetary funds between two individuals or entities.

"Transaction data" may include any suitable information associated with a transaction. In some embodiments, transaction data may include any suitable combination of: identification data associated with an access device (e.g., one or more identifiers of an access device), identification information associated with a user device (e.g., one or more identifiers associated with a user device), a transaction amount (such as a preauthorization amount and/or purchase price of a transaction), payment data (e.g., a payment account identifier associated with a payment account), one or more locations each associated with an access device and/or a user device, or any suitable information. Examples of payment data may include a PAN (primary account number or "account number"), user name, expiration date, CVV (card verification value), dCVV (dynamic card verification value), CVV2 (card verification value 2), CVC3 card verification values, etc. CVV2 is generally understood to be a static verification value associated with a payment device. CVV2 values are generally visible to a user (e.g., a consumer), whereas CVV and dCVV values are typically embedded in memory or authorization request messages and are not readily known to the user (although they are known to the issuer and payment processors). Payment data may be any information that identifies or is associated with a payment account. Payment data may be provided in order to make a payment from a payment account. Payment data can also include a user name, an expiration date, a gift card number or code, and any other suitable information. Interaction data may relate to ticket information for an event, data to access a building, transit ticket information, passwords, biometrics, or other credentials to access secure data, etc.

An "International Organization for Standardization (ISO) 8583 messaging standard" may define how messages are formatted and transmitted by systems exchanging transaction requests and responses. The ISO 8583 messaging standard is a standard for systems that exchange electronic transaction information associated with a payment made by a consumer using a payment device or a payment account. The ISO 8583 messaging standard may define a message format including a message type identifier (MTI), bitmaps, and data elements. The MTI may be 4 digits that describe the message type including the relevant ISO 8583 version, message class, message function, and message origin. Within ISO 8583 standards, a bitmap may indicate which data elements or data element subfields (e.g., amongst fields 1 through 128) may be present elsewhere in an ISO 8583 message. The data elements may be the fields carrying the actual transaction information related to a transaction for which the message is involved. The standard may define permitted content, attributes, and field length of certain data fields.

A "memory" may include suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

A "processor" may include any suitable data computation device or devices. A processor may comprise one or more microprocessors working together to accomplish a desired function. The processor may include a CPU that comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

As noted above, RAG techniques and LLMs in general suffer from problems such as hallucinations, long convergence times, and high power usage. This is particularly the case with large datasets (e.g., those having 10,000 to 100,000 or more entries). When a conventional RAG algorithm is applied with such a large dataset, the output may include hallucinations, wrong results, the fetching of incorrect entries, and similar issues. Thus, LLMs may not provide correct results based on very large datasets, and may fail to return the output requested by a user.

The techniques described herein solve these and other problems by efficiently constructing LLM prompts and database searches using key-value pairs. This is particularly useful when the LLM requires information stored in a very large dataset. Using traditional means to provide such information to the LLM would create issues such as hallucinations and long processing times.

In various embodiments, LLM output satisfying several criteria can be generated based on natural language input and a large dataset. A first LLM call is used to break a natural language query into a set of keywords using context metadata including key value pairs constructed based on the large dataset. The keywords are compared to the contents of a database to identify relevant data entries. The original question and matching data entries are then passed as a second LLM call, and the LLM generates an output example that includes the specified criteria.

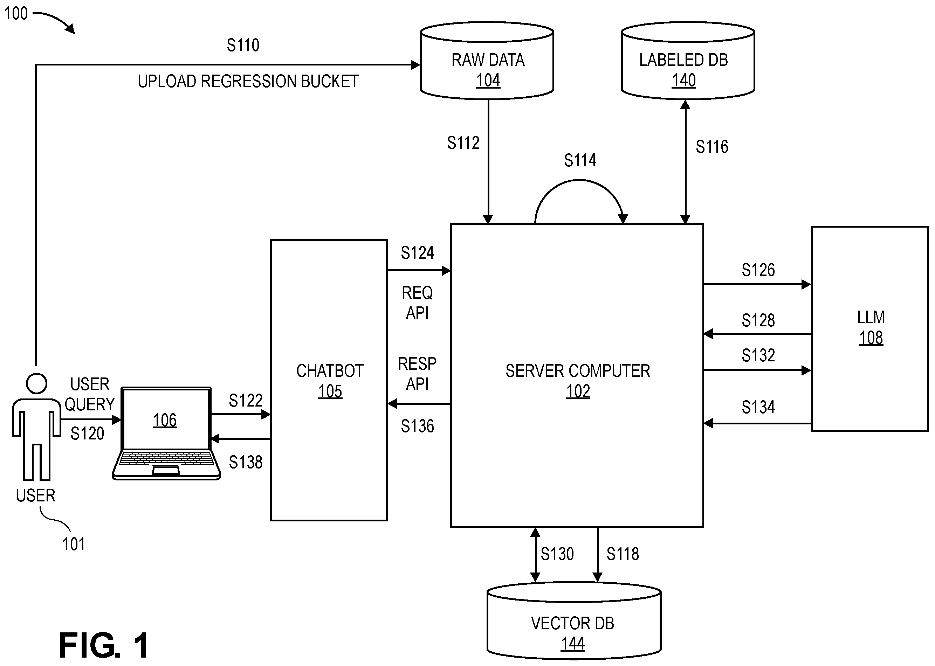

FIG. 1 shows an example system 100 and simplified flow for index-based RAG, according to various embodiments. The system 100 can comprise one or more computers associated with a server computer 102. The system 100 may further include a user computing device 106, a chatbot 105, an LLM 108, a labeled database (DB) 140, and a vector DB 144. For simplicity of illustration, a limited number of components are shown in FIG. 1. It is understood, however, that embodiments may include more than one of each component.

The components in the system depicted in FIG. 1 can be in operative communication with each other through any suitable communication channel or communications network. Suitable communications networks may be any one and/or the combination of the following: a direct interconnection; a short-range communication protocol; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. Messages between computers, networks, and devices may be transmitted using secure communications protocols such as, but not limited to, Secure File Transfer Protocol (SFTP); Secure Hypertext Transfer Protocol (HTTPS), Secure Socket Layer (SSL), ISO (e.g., ISO 8583) and/or the like.

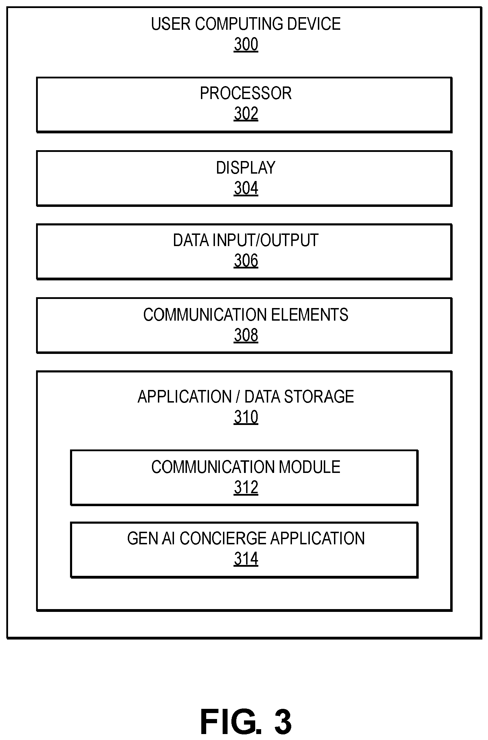

In some instances, a user 101 interacts with the user computing device 106 to perform queries. The user computing device 106 can be a device such as a laptop computer, desktop computer, smartphone, tablet, or the like. The user computing device 106 may include a natural language interface that allows users to enter a prompt in plain English. An example of a suitable user computing device 106 is described in further detail below with respect to FIG. 3.

The chatbot 105 processes natural language queries received from the user computing device 106. The chatbot 105 may include software and/or hardware configured to assist the user 101 through text or voice interactions. The chatbot 105 can receive a user query and process the user query (e.g., to convert voice to text, identify an intent, and/or other NLP tasks). The chatbot 105 can analyze a user query and provide a relevant response. The chatbot 105 may be implemented as part of the server computer 102, part of the user computing device 106, or via one or more remote computing devices.

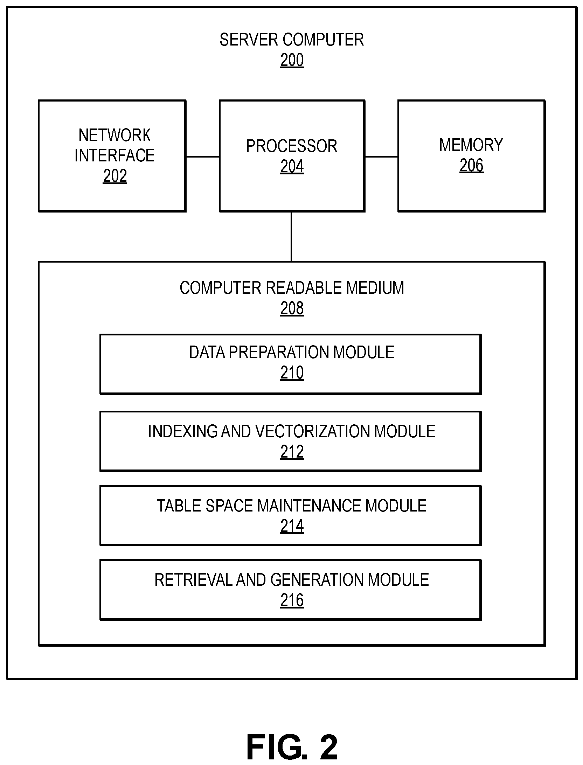

The server computer 102 receives query information from the user computing device 106 and performs RAG on a large dataset to generate a natural language response to the user query using the LLM 108. The server computer 102 may include functionality for data preparation, indexing, and vectorization, as described herein. An example of a suitable server computer is described in further detail below with respect to FIG. 2.

The LLM 108 is a language model configured to generate natural language text. LLMs are generally trained on extremely large datasets and configured to answer user queries. In various implementations, the LLM 108 can be communicatively coupled to the server computer 102 (e.g., as a cloud service) and/or executing on the server computer.

In some embodiments, the server computer 102 is communicatively coupled to one or more data stores, which may include a raw data 104, a labeled database (DB) 140, and a vector DB 144.

The raw data 104 may include large amounts of historical data that is associated with the user query. In some instances, the raw data 104 includes a regression data bucket provided by the user 101 at S110 as context for the user's query at S120. In some examples, the raw data 104 incudes transaction data associated with historical payment transactions. As a specific example, the raw data 104 may include transaction data formatted according to a protocol such as International Organization for Standardization (ISO) 8583. In other examples, the dataset includes educational records, medical records, and/or browser data. It should be understood that the techniques described herein can be applied to various large datasets which the user wishes to use to generate information.

The labeled DB 140 is a database storing metadata characterizing a dataset. In some instances, the metadata is formatted into key-value pairs, where each key is a category or property of a discrete segment of the corresponding dataset. For example, the dataset includes transaction data, and each key is a property of a particular transaction, such as "issuer country" or "authentication mode." As another example, the dataset includes educational records, and each key is a property of a particular student record, such as "student ID" or "major." In some aspects, the labeled DB 140 is a NoSQL database.

The vector DB 144 is a database storing vectorized information about data elements and categories. In some instances, embeddings are stored in the vector DB 144 mapping vectorized data to indexes, as described herein.

In various implementations, the system 100 may be implemented in a cloud computing environment, in which multiple servers and/or data stores communicate over a network to perform the services described herein.

At step S110, the user 101, via the user computing device 106, uploads raw data 104. In some implementations, the raw data 104 is a regression bucket that holds historical data. For example, the historical data may correspond to transaction data, medical data, browser history, or any other suitable type of data. In some instances, the raw data 104 corresponds to a large amount of transactions, such as 10,000 transactions, 100,000 transactions, or more. In some examples, the raw data 104 is raw transaction data, in a standardized (e.g., ISO 8583) format. Such data may be in a hexadecimal format that has data fields containing transaction data.

At step S112, the server computer 102 ingests the raw data 104. In some examples, for each category of data, or key *k*, the server computer 102 fetches values from the raw data 104, which may be in a format such as CSV (Comma-Separated Values) when retrieved. As an example, the raw data 104 includes ISO 8583 transaction records. Such a record includes hexadecimal data that represents properties of each transaction. For example, certain numbers can indicate that the transaction was card-present (key = presentment mode).

At step S114, the server computer 102 parses and processes the raw data 104. In some aspects, processing the raw data 104 includes generating key-value pairs that express the meaning of the data as well as the data values (e.g., mapping data elements to data categories). In some examples, the data is synthesized and arranged into key-value format, where the key represents a category or label, and the value represents the data for that category or label. This is used to form a data entry, which has *n* number of such key values, and is given by: ${d}_{1} = f \left({k}_{1}:{V}_{1 a},{k}_{2}:{v}_{2 a},…{k}_{n}:{v}_{na}\right)$ [1] The data entry *d*₁ may correspond to one transaction, one patient record, or other item of interest from the raw data 104. There is some number *m* of these data entries to be analyzed, where *m* can correspond to hundreds to hundreds of thousands of transactions or other data points of interest. $D \left(d\right) = \left\{{d}_{1},{d}_{2},…{d}_{m}\right\}$ [2] The aggregate dataset *D*(*d*) includes all the data categories from the raw data 104 (e.g., all the categories of ISO data fields used in the raw data 104, such as transaction type, presentment mode, acquirer country code, etc.).

At step S116, the server computer 102 creates a new database, the labeled DB 140, and stores these key-value pairs to the labeled DB 140. The labeled DB 140 combines the data for each label of these hundreds to hundreds of thousands of data entries. The labeled DB 140 can include the entries from the raw data 104, stored in a more efficient manner for searching and retrieval. For example, for transaction data, the labeled DB 140 can include information for all the transactions from the raw data 104.

In some aspects, the labeled DB 140 combines the value for the hundreds to hundreds of thousands of data entries ingested. The resulting dataset *Dₓ* can be expressed as: ${D}_{x} \left(D\right) = f \left[\left\{{K}_{1}:{V}_{1 a},{V}_{1 b},{V}_{1 c},…{V}_{1 m}\right\},\left\{{K}_{2}:{V}_{2 a},{V}_{2 b},{V}_{2 c},…{V}_{2 m}\right\},…\left\{{K}_{n}:{V}_{na},{V}_{nb},…{V}_{nm}\right\}\right] .$ [3]

The dataset *Dₓ* captures every key (*K₁*, *K₂*, . . . *Kₙ*) and corresponding set of values for each key (e.g., *V₁ₐ,V*_{1*b*}, *V*₁*c,*...*V*_{1*m*}). As a specific example, the key *K₁* = "message type" is mapped to a corresponding set of values for that key, which can include V*₁ₐ* = "authorization," V*_{1b}* = "balance inquiry," and *V_{1c}* = "void." Similarly, other keys can be mapped to other values for those keys (e.g., *K*₂ = "issuer country code," mapped to values such as United States, India, Greece, etc. and *K*₃ = "acquirer country code," mapped to values such as United States, India, Greece, etc). Thus, after parsing the raw data to identify categories and data elements therein, the server computer generates the dataset, including mapping the categories to the data elements in the key-value pairs. This dataset *Dₓ* can help the LLM to precisely understand the user query against the context and break it down into keywords, as further described below.

At step S118, the server computer 102 performs indexing and vectorization operations to construct the vector DB 144. In some aspects, each key-value pair is combined to create new keys. For example, new keys K1, K2, . . . Kg are created: $\begin{matrix}K 1 = {K}_{1} + {V}_{1 a} … \\ K 2 = {K}_{1} + {V}_{1 b} … \\ Kg = {K}_{j} + {V}_{1 m} .\end{matrix}$ [4]

In some aspects, for each key, the index of each entry in the dataset (e.g., for each transaction or other type of data entry) that maps to that key is created. The values for the above keys are index values of the dataset "*d*" where the value *V* exists. The resultant dataset is: ${D}_{z} = \left({D}_{x}+d\right) = f \left[\left\{{K}_{1}:{d}_{1}\right\},\left\{{K}_{2}:{d}_{1}\right\},…\left\{{K}_{x}:{d}_{m}\right\}\right]$ [5] Thus, the server computer generates supplemental keys paired to the index of the corresponding data entry to generate supplemental key-value pairs.

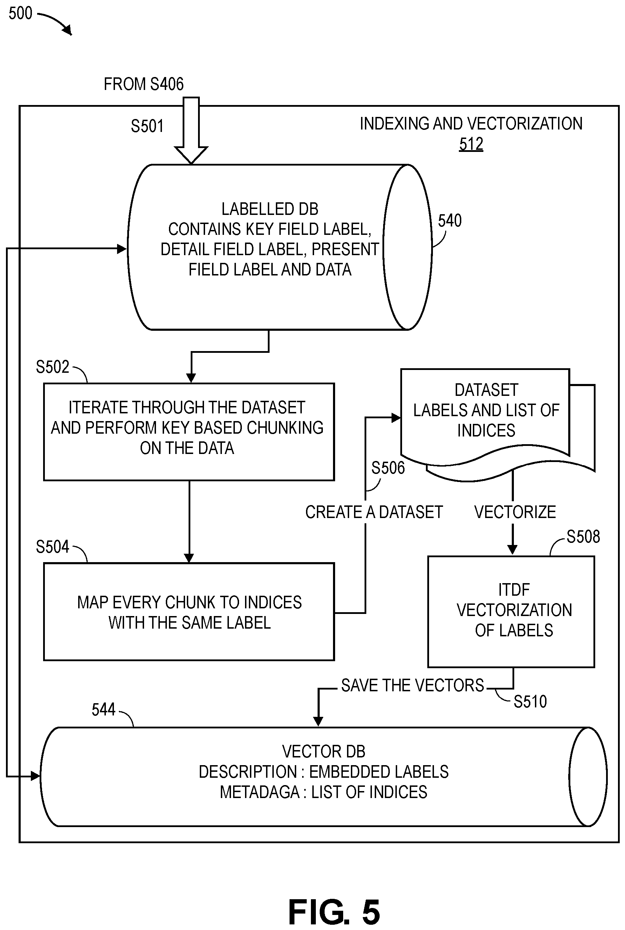

In some aspects, the dataset *D_{z}* is vectorized. The keys *K₁*, *K₂*, . . . *Kₓ* are embedded. The corresponding data indexes are stored as metadata of these embeddings. $V \left({D}_{z}\right) = f ⋅ f \left⌈\left\{e\left({K}_{1}\right):{d}_{1},{d}_{5},{d}_{n}\right\},\left\{e\left({K}_{2}\right):{d}_{1}…{d}_{n}\right\},…\left\{e\left({K}_{x}\right):{d}_{m},…{d}_{n}\right\},\right⌉$ [6] Thus, the server computer vectorizes the supplemental key-value pairs and stores the vectorized supplemental key-value pairs. Example indexing and vectorization techniques are illustrated and described in further detail below with respect to FIG. 5.

At step S120, the user computing device 106 receives a user query from the user 101. The user 101 may provide a natural language query via input of the user computing device 106 such as a keyboard, mouse, and/or microphone.

In various implementations, the user query specifies information the user seeks, corresponding to the raw data 104. For example, the user query specifies categories and/or data elements corresponding to the raw data 104. As a specific example, the user wants to generate testing data based on historical transaction data. Such testing data can include generated transaction data that can be used to test a model or algorithm for transaction processing-related tasks. Continuing with this example, the user query is "generate a test case for a purchase transaction with a Visa^{®} card and a PIN." This user query inherently specifies the categories "message type" and "authentication type" that correspond to the respective data elements "purchase" and "PIN."

The user computing device 106 transmits the user query to the chatbot 105 at step S122. For example, the user query is transmitted to the chatbot 105 over a network (e.g., via a wireless or wired connection). In other implementations, the chatbot 105 executes locally on the user computer device 106, and the user query can be passed to the chatbot 105 within the user computing device 106.

Upon receiving the user query at step S122, the chatbot 105 may process the user query. Processing the user query may include performing various natural language processing (NLP) tasks, such as converting speech input to text input, analyzing text input to identify keywords or intents, and so forth.

After processing the user query, the chatbot 105 transmits the processed query to the server computer 102 at step S124. In some implementations, the server computer 102 exposes one or more Application Program Interface(s) (API(s)) to the chatbot 105. For example, the server computer 102 exposes a request API configured for receiving requests and a response API configured for transmitting responses. The chatbot 105 may transmit the processed query to the server computer 102 via a call to the request API.

The server computer 102 receives the processed query (e.g., via the request API). For example, the server computer 102 receives a natural language query that specifies a plurality of categories and data elements, as described above.

At step S126, the server computer 102 provides, to the LLM 108, a first prompt comprising the received natural language query and context metadata characterizing the categories and the data elements in a dataset. For example, the query can be provided with the context metadata *D*ₓ(*D*) described above. In some instances, the context metadata comprises a set of key-value pairs, where the keys include the categories in the dataset, and the values include corresponding data elements in the dataset.

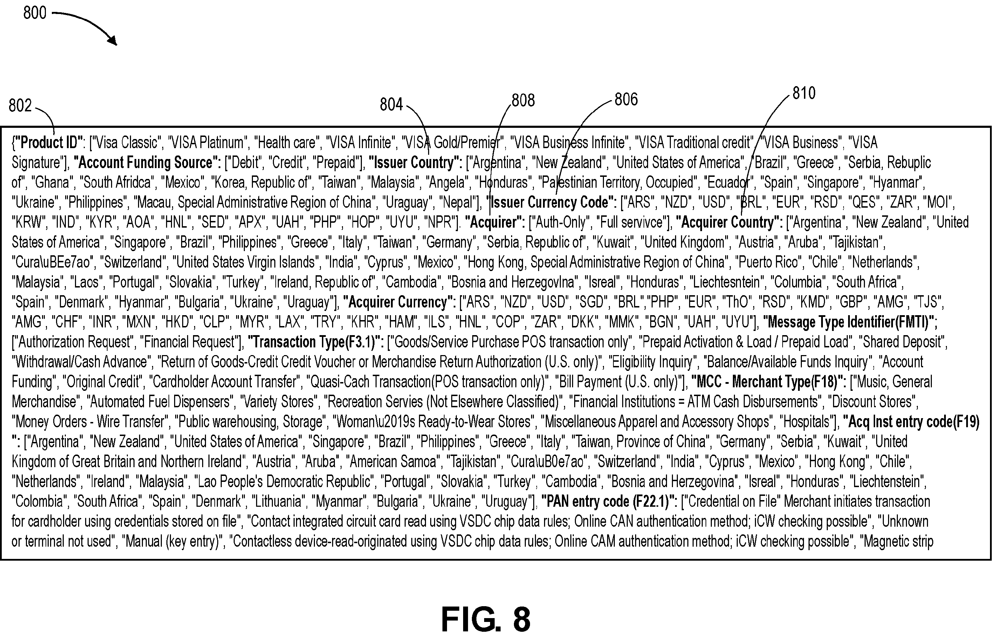

As a specific example, FIG. 8 shows an example of context metadata 800. The context metadata 800 includes various keys, corresponding to categories in the dataset, including "Product ID" 802, "Issuer Country" 804, "Issuer Currency Code" 806, "Acquirer" 808, "Acquirer Currency" 810. For each key, values for that key are also included in the context metadata 800. For example, for the key or category "Issuer Country," the values for that key, or different data elements for issuer country, are provided, including Argentina, New Zealand, United States, and so forth.

The prompt can further include instructions to identify keywords included in the query. For example, along with the user query and the context metadata, the prompt can include instructions such as "Identify keywords in the user query." As a specific example, the prompt directs the LLM to provide a JSON formatted list of unique criteria by splitting the user query. These keywords or criteria correspond to the data elements in the dataset. For example, the keyword may be the same as the data element (e.g., keyword "India" corresponds to data element "India." Alternatively, or additionally, the keyword may be synonymous with, or indicative of, the data element.

At step S128, the LLM 108 outputs a plurality of keywords identified in the natural language query based on the context metadata. The LLM 108 may identify the keywords included in the query using the context metadata provided at step S126. This helps to limit the context data size, as well as providing more precise keyword-based subqueries. For example, the natural language query is "generate a cash withdrawal manual key e-commerce request with funding source as debit and merchant country as Ireland." Using the context metadata, the LLM identifies keywords "cash," "manual key," "e-commerce," "debit,' and "Ireland." Alternatively, or additionally, the LLM can identify the data categories corresponding to the keywords, such as, e.g., "country" for "Ireland" and "funding source" for "debit."

In some instances, the LLM uses the *Dₓ* dataset to understand what key labels it should use to break down the user query into precise keywords *Kwi*. The LLM call and output can be expressed as: $LLM \left(User Query+Dx\right) = Kw 1 , Kw 2 , … Kwn$ [7] , where the LLM input includes the user query and the context metadata *Dₓ*, and the LLM output includes the identified keywords *Kw*1, *Kw*2,...*Kwn*.

At step S130, the server computer 102 identifies one or more entries in the dataset that contain data elements corresponding to one or more of the plurality of keywords. The keywords shown above can be used to execute similarity search on the vector DB 144. In some aspects, each of the keywords is embedded, and a similarity search is performed on the vector DB 144 to identify similar entries therein. The embedded keywords may be searched against the stored *e*(*Kx*) vector embeddings of equation [6] to find the matching indexes of the dataset *dₙ*. In some examples, K-Nearest Neighbor (KNN) is used to identify the entries corresponding to the keywords. Continuing with the above example, the data element "e-commerce transaction" is searched to find all the e-commerce transactions, and the data element "debit" is searched to find all the transactions with a debit funding source.

In some aspects, two or more entries corresponding to two or more of the plurality of keywords are identified. The two or more entries are ranked based on the presence of the two or more of the plurality of keywords. At least a highest-ranked entry is selected. The index of the highest-ranked entry or entries is then provided to the LLM. In some instances, the ranking includes executing a recursive search on the indexes and the keywords.

In some aspects, the search produces indexes to the different data entries that have those criteria. As an example, executing similarity search on three keywords, *Kw1*, *Kw2*, and *Kw3* gives the following indexes: $\begin{matrix}Kw 1 = {d}_{1} , {d}_{2} , {d}_{3} \\ Kw 2 = {d}_{1} , {d}_{5} , {d}_{4} , {d}_{3} \\ Kw 3 = {d}_{3} , {d}_{5} .\end{matrix}$ [8] For instance, *Kw1* is "debit," and three transactions with the indexes of *d*₁, *d*₂, *d*₃ are identified as debit transactions.

In some aspects, the data is sorted to identify entries that contain one or more, two or more, or all of the keywords. In the above example, *d*₃ satisfies all three keywords, *Kw1*, *Kw2*, and *Kw3*. Therefore, *d*₃ will be used to construct the final prompt to the LLM as described below. The server computer 102 may, for example, execute a recursive search on the indexes (e.g., *d*₁, *d*₂, *d*₃) to rank the highest hit data entry for each criteria or keyword. A recursive search can be performed to extract the highest ranked data entry that matches most of the criteria. In this order, the keywords can be grouped and mapped to particular data entries (e.g., transactions for the example of transaction data) that satisfy those criteria. Every keyword will at least have one data entry mapped to it, unless the keyword is an outlier (e.g., not found in the vector DB 144).

Based on the results received at step S130, the server computer 102 generates a second prompt. The second prompt includes the received natural language query, the keywords, and one or more indexes to the one or more identified entries in the dataset. For example, the second prompt to the LLM is $LLM \left(User Query,+Context \left[Kw1,Kw2,Kw3+{d}_{3}\right]\right)$ [9] , where *Kw*1, *Kw*2, *Kw*3 are the three keywords extracted from the user query and *d*₃ is the index to the data entry that is identified as containing these three keywords. Accordingly, in some aspects, the server computer uses the stored vectorized supplemental key-value pairs to prepare the second query.

At step S132, the server computer 102 provides the second prompt to the LLM. The LLM processes the prompt and generates a response. As part of processing the prompt, the LLM and/or the server computer will fetch the data indicated by the one or more indexes. The data may be fetched from the labeled DB 140 (i.e., the dataset therein) using the index(es). In some aspects, a criteria tag indicating a group of keywords that matches the corresponding data element is added to the labeled DB 140 for that data element. This will enable the LLM to clearly understand which group of keywords is matched to which data entry.

At step S134, the LLM outputs a generated output that is based on the one or more identified entries in the dataset. For example, the LLM can output a test transaction with the properties specified in the original query. In some instances, the output of the LLM includes testing data which may be in the format of the original raw data 104. For example, the LLM generates ISO 8583 test cases that match the specified criteria, such as transaction type, card type, PIN, and other relevant fields and values. Alternatively, or additionally, the LLM generates a dual output format that provides both raw hex and parsed human-readable test cases, to help users verify and debug the test cases easily. As other examples, the LLM may output training or testing data in the form of sample datasets from applications such as browser history, medical history, weather data, or any other suitable dataset.

At step S136, the server computer 102 provides the generated output to the chatbot 105. As shown in FIG. 1, the server computer 102 may expose a response API that is used to provide (e.g., push) the output to the chatbot 105. Alternatively, or additionally, the server computer 102 may use any suitable data transmission mechanism to provide the generated output to the chatbot 105.

At step S138, the chatbot 105 provides the generated output to the user computing device 106. Upon receiving the generated output at step S126, the user computing device 106 may provide the output or a derivative thereof to the user 101. The user computing device 106, may, for example, display the response to the user 101 on a display component. Alternatively, or additionally, the user computing device 106 may output the response as speech output to the user 101 via a speaker. Thus, the server computer may cause display of the generated output on a display component of a remote computing device and/or cause speech output to be played via a speaker component of a remote computing device.

The user 101 and/or user computing device 106 can then make suitable use of the generated output. For example, the generated output includes testing data. The testing data may be added to a larger testing dataset, which is used to test code. Alternatively, or additionally, the generated output can include training data, which is used to train another machine learning model.

FIG. 2 illustrates an example of a server computer 200, according to some embodiments. The server computer 200 may be part of the system 100 depicted in FIG. 1 (e.g., server computer 102). The server computer 200 may include a processor 204 operatively coupled to a memory 206, a network interface 202, and a computer-readable medium 208. The server computer 200 may include more components, or fewer components, than illustrated in this example.

The processor 204 may be implemented as one or more integrated circuits (e.g., one or more single core or multicore microprocessors and/or microcontrollers). The processor 204 may be used to control the operation of the server computer 200. The processor 204 can execute a variety of programs in response to program code or computer-readable code stored in memory. The processor 204 may include functionality to maintain multiple concurrently executing programs or processes.

The memory 206 may be implemented using any combination of any number of non-volatile memories (e.g., flash memory) and volatile memories (e.g., DRAM, SRAM), or any other non-transitory storage medium, or a combination of media.

The computer-readable medium 208 may comprise one or more non-transitory media for storage and/or transmission. Suitable media include, as examples, a random access memory (RAM), a read only memory (ROM), a magnetic medium such as a hard-drive or a floppy disk, or an optical medium such as a compact disk (CD) or DVD (digital versatile disk), flash memory, and the like. The computer-readable medium 308 may be any combination of such storage or transmission devices. The computer-readable medium 208 may comprise software code stored as a series of instructions or commands. In some aspects, the code stored by the computer-readable medium 208 includes a data preparation module 210, an indexing and vectorization module 212, a table space maintenance module 214, and a retrieval and generation module 216.

In some embodiments, the computer-readable medium 208 includes code for causing the processor 204 to perform a method comprising receiving, by a server computer, a natural language query that specifies a plurality of categories and data elements; providing, by the server computer to a Large Language Model (LLM), a first prompt comprising the received natural language query and context metadata characterizing the categories and the data elements in a dataset, wherein the context metadata comprises a set of key-value pairs, where the keys include categories in the dataset, and the values include corresponding data elements in the dataset; outputting, by the LLM, a plurality of keywords identified in the natural language query based on the context metadata; identifying, by the server computer, one or more entries in the dataset that contain data elements corresponding to one or more of the plurality of keywords; providing, by the server computer to the LLM, a second prompt comprising the received natural language query, the keywords, and one or more indexes to the one or more identified entries in the dataset; and outputting, by the LLM, a generated output that is based on the one or more identified entries in the dataset.

In some embodiments, the data preparation module 210 includes instructions which, when executed by the processor 204, cause the performance of operations for extracting raw data and preparing datasets from the raw data. In some examples, the data is extracted from raw regression data buckets and prepared into multiple datasets. Each of these datasets may have unique characteristics that are suitable for the processing described herein. In some aspects, the data preparation module 212 is an offline module and works in the backend to prepare the tool with the requisite data and intelligence it needs. In some aspects, the data preparation module 210 is configured to provide the indexed data to the indexing and vectorization module 212.

In some embodiments, the indexing and vectorization module 212 includes instructions which, when executed by the processor 204, cause the performance of operations for precise indexing of the extracted data. For example, indices of the different data elements are mapped to properties of those data elements. The indices and properties can then be vectorized and stored to the vector DB 104B as shown in FIG. 1.

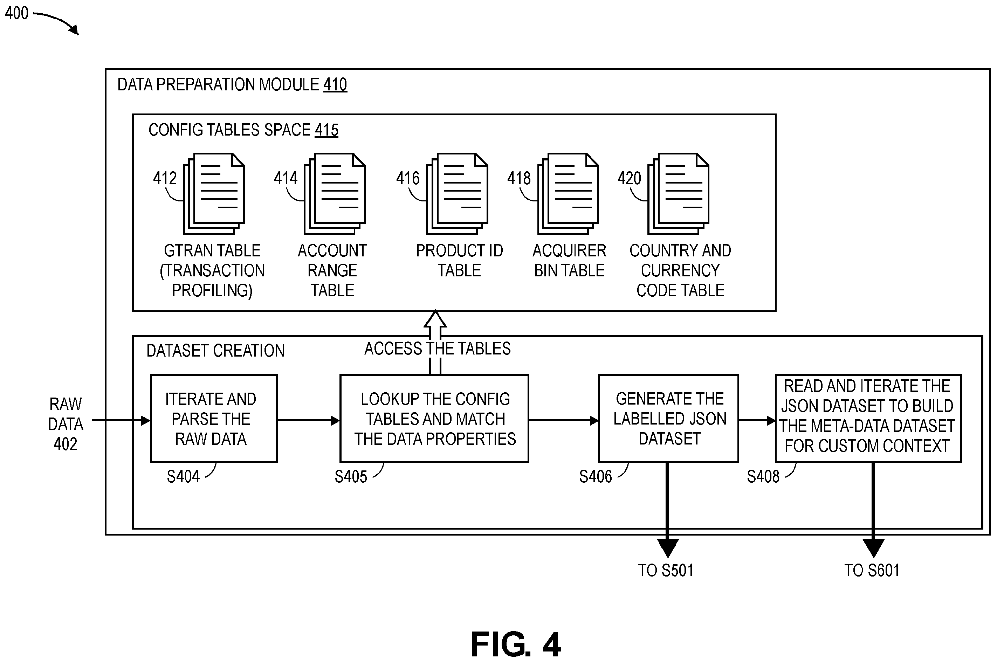

In some embodiments, the table space maintenance module 214 includes instructions which, when executed by the processor 204, cause the performance of operations for managing configuration tables. As shown and described in further detail with respect to FIG. 4, the server computer can include or be communicatively coupled to one or more tables that contain information about the different fields and data types in the dataset. A lookup into these configuration tables can be performed to extract information about the associated data. These properties help to enrich the dataset with more intelligence that can help the LLM to better address user queries. In some aspects, the table space maintenance module 214 periodically refreshes and maintains the table space.

In some embodiments, the retrieval and generation module 216 may comprise code that causes the processor 204 to retrieve data and generate natural language responses. Once all the backend datasets are built, the processing of the retrieval and generation module 216 may be performed responsive to a received user query. In some aspects, the retrieval and generation module is an online module capable of communicating with the user computing device 106 and databases 104, 140, 144.

In some embodiments, the retrieval and generation module 216 includes components configured for simulating data. For example, in some applications, the retrieval and generation module 216 includes or is communicatively coupled to a COSMOS (Complete Online System for Message-transfer Over Simulated Environment) deblock API, which is an ISO 8583 messaging simulator. The COSMOS API may be accessible via REST interfaces.

FIG. 3 shows an example of a user computing device 300 according to some embodiments. The user computing device 300 may include circuitry that is used to enable certain device functions, such executing applications and communicating with other computing devices. The functional elements responsible for enabling those functions may include a processor 302 that can execute instructions that implement the functions and operations of the user computing device 300. Processor 302 may access application / data storage 310 (or another suitable memory region or element) to retrieve instructions or data used in executing the instructions. The user computing device 300 may include more or fewer components than depicted in FIG. 3, according to various implementations.

Data input/output 306, such as a keyboard, microphone, and/or touchscreen, may be used to enable a user to operate the user computing device 300 (for example, allowing the user to use a gen AI concierge application 314). Data input/output 306 may also be configured to output data (via a speaker, for example). Display 304 may also be used to output data to a user. Communications elements 408 may be used to enable data transfer between the user device 300 and a wired or wireless network (via a wired or wireless connection, antenna, and/or the like, for example), enable data transfer functions, and may be used to assist in connectivity to the Internet or another network.

The application / data storage 310 may comprise a computer-readable medium that may include a number of software modules, such as communications module 312 and gen AI concierge application 314.

The communications module 312 may comprise code enabling the processor 302 to implement or enable communications between the user computing device 300 and other devices, such as server computers, other user computing devices, and so forth. The communications module 312 may allow communication according to any appropriate protocol, such as TCP, UDP, IS-IS, OSPF, IGRP, EIGRP, RIP, BGP, etc. The communications module 312 may allow secure communication by enabling the processor 302 to establish a secure or encrypted communication channel between the user computing device 300 and other devices. The communications module 312 may allow the transmission of user queries and other data to other devices, such as the server computer 200.

The gen AI concierge application 314 may comprise code enabling the user computing device 300 to provide an interface for performing techniques as described herein to answer a user query based on database information. For example, in some use cases, the gen AI concierge application 314 cooperates with the server computer 200 to generate ISO test cases from natural language prompts.

FIG. 4 is a flow chart illustrating a process 400 for dataset creation according to some embodiments. The process 400 may be performed by a server computer as illustrated in FIGS. 1 and 2. The data preparation module 410 of FIG. 4 may correspond to the data preparation module 210 of FIG. 2. In some instances, the process 400 may correspond to the operations of steps S112 - S116 of FIG. 1.

At S402, the data preparation module 410 ingests raw data. At S404, the data preparation module 410 iterates and parses the raw data. The raw data may include data such as hexadecimal data that is not straightforward to interpret. For example, the raw data includes hexadecimal data that specifies multiple data fields within a string. The data preparation module 410 parses the hexadecimal data to identify the fields.

At S405, the data preparation module 410 accesses the configuration tables space 415. This includes identifying appropriate configuration tables and using them to determine data properties. For example, as shown in FIG. 4, the configuration tables can specify properties of transaction data such as ISO 8583 transaction data. The data preparation module 410 performs a lookup into these configuration tables to extract information (e.g., transaction properties in the example of transaction data). These properties help to enrich the dataset with more intelligence, which ultimately helps the LLM to best respond to the prompt.

In some aspects, the configuration table space includes multiple property level tables. FIG. 4 illustrates example property level tables according to some implementations. As shown in FIG. 4, these tables can include a GTRAN table 412, account range table 414, product ID table 416, acquirer BIN table 418, and a country and currency code table 420. It should be understood that this is one example of applicable tables, and different tables can be used to account for different types of datasets.

The GTRAN table 412 is a transaction profiling table. The GTRAN table 412 provides high-level classification of transaction properties. For example, the GTRAN table 412 stores transaction description properties, such as those that are defined using the ISO 8583 fields Message Type (MTI), F3.1, and F25.

The account range table 414 specifies PAN and token account ranges. The account range table 414 may provide issuer attributes, such as product ID and account funding source, that may be embedded within the PAN and token in a given data element.

The product ID table 416 provides the Product ID description of the account. In ISO 8583 messaging, a "product ID" or "product code" is not a standard field. Instead, ISO 8583 focuses on financial transaction details like card numbers, amounts, and authorization requests. Thus, the product ID may be encoded within the transaction details. The product ID table 416 provides mappings for extracting such encoded details.

The acquirer BIN table 418 provides acquirer attributes. Such acquirer attributes can include, for example, country, currency, acquirer type, and so forth. The country and currency code table 420 provides the country name and currency name from ISO country and currency codes

In some examples, these tables characterize what the raw data means. For example, a table may map a data element (e.g., card present) to a category or data type (e.g., presentment mode).

In some examples, based on the identified fields, the parsed data is stored as a labeled dataset such as a labeled Java Script Object Notation (JSON) dataset. At step S406, the dataset is created. This parsed JSON dataset can hold hundreds of thousands of entries (e.g., for hundreds of thousands of transactions in the case of transaction data). This transaction dataset is stored in the labeled database 540 along with the index to each of the transaction set.

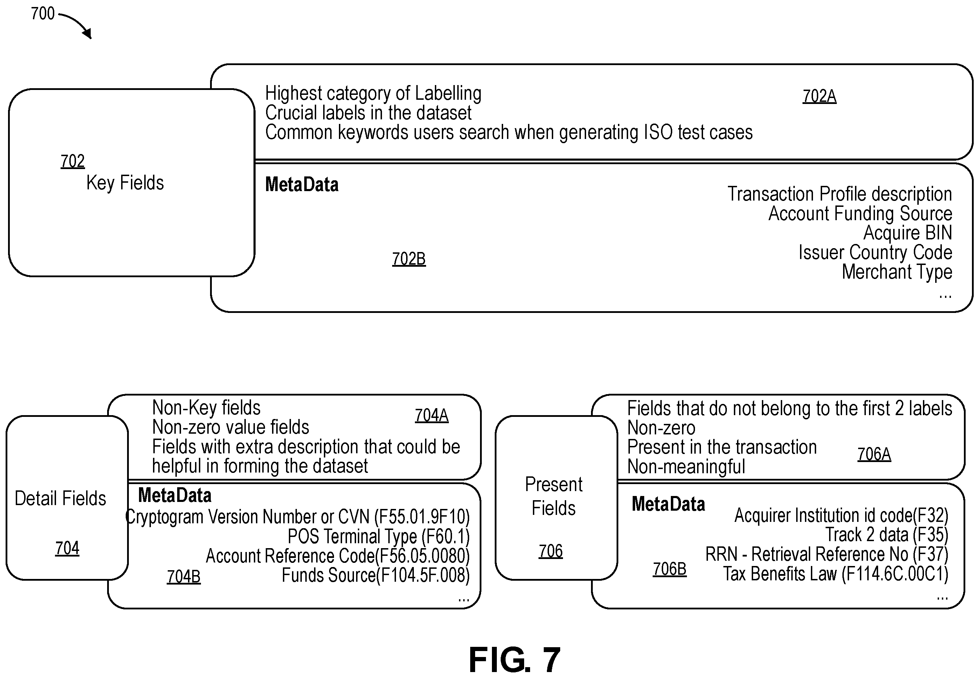

In some aspects, the server computer 102 formats the dataset into key-value pairs. In some instances, the key-value pairs are organized as key fields (e.g., the most important fields), detailed fields (e.g., giving meanings of the fields), and present fields. Example properties of such fields are described in further detail below with respect to FIG. 7.

FIG. 5 is a flow chart illustrating a process 500 for indexing and vectorization according to some embodiments. The process 500 may be performed by a server computer as illustrated in FIGS. 1 and 2. The indexing and vectorization module 512 of FIG. 5 may correspond to the indexing and vectorization module 212 of FIG. 2. The process 500 may correspond to the indexing and vectorization operations of step S118 of FIG. 1.

At S501, the indexing and vectorization module 512 receives a labeled dataset. For example, the indexing and vectorization module 512 receives the labeled dataset from the data preparation module 410 as shown in FIG. 4.

The indexing and vectorization module 512 stores the labeled dataset to a labeled DB 540. The labeled DB 540 may correspond to the labeled DB 140 shown in FIG. 1. The labeled DB 540 may store a labeled dataset that includes key field labels, detailed field labels, present field labels, and/or data such as transaction data, as shown in FIG. 5. Such fields are described in further detail below with respect to FIG. 7.

At S502, the indexing and vectorization module 512 iterates through the dataset and performs key-based chunking on the data. The chunks may be established based on different data elements in the dataset. For example, in the case of transaction data, a chunk is established for every category. In some aspects, the chunks are generated based on each key (e.g., each property of the transaction for transaction data). Every key is chunked. In this way, precise small chunks are obtained that hold significant information and will be used to map the user query criteria.

At S504, the chunks are matched to indices with the same label as the chunk. For example, the index to data in the dataset that includes the label of the chunk is identified.

At S506, the indexing and vectorization module 512 creates a dataset. The dataset includes the labels and the list of indices.

At S508, the indexing and vectorization module 512 vectorizes the labels. In some aspects, this is executed using Inverse Term Document Frequency (ITDF), as shown in FIG. 5. ITDF is a statistical measure used to evaluate the importance of a word in a document relative to a collection of documents (corpus). ITDF helps in determining the importance of a term within a document relative to the entire corpus. Terms that appear frequently in a document but are rare across the corpus are assigned higher weights, making them more significant for that document. By assigning lower weights to common terms (like 'the', 'is', 'in') that appear frequently across many documents, ITDF helps in reducing the impact of these common words, thus reducing noise in the data.

In some aspects, the key fields (properties) from the index file are ranked using ITDF. Subsequent cosine embedding on each of the chunk may then be generated.

At S510, the indexing and vectorization module 512 stores the vectors to the vector DB 544. The vector DB 544 may correspond to the vector DB 144 shown in FIG. 1. These embeddings generated at step S508 can be stored in the vector DB 544 mapping each vectored chunk to a corresponding index.

The vector DB 544 may store description, embedded labels, metadata, and a list of indices, as shown in FIG. 5. The vector store size is efficient, and hardly altered with addition of new datasets, since the vectorization is done on properties and indices rather than the underlying data.

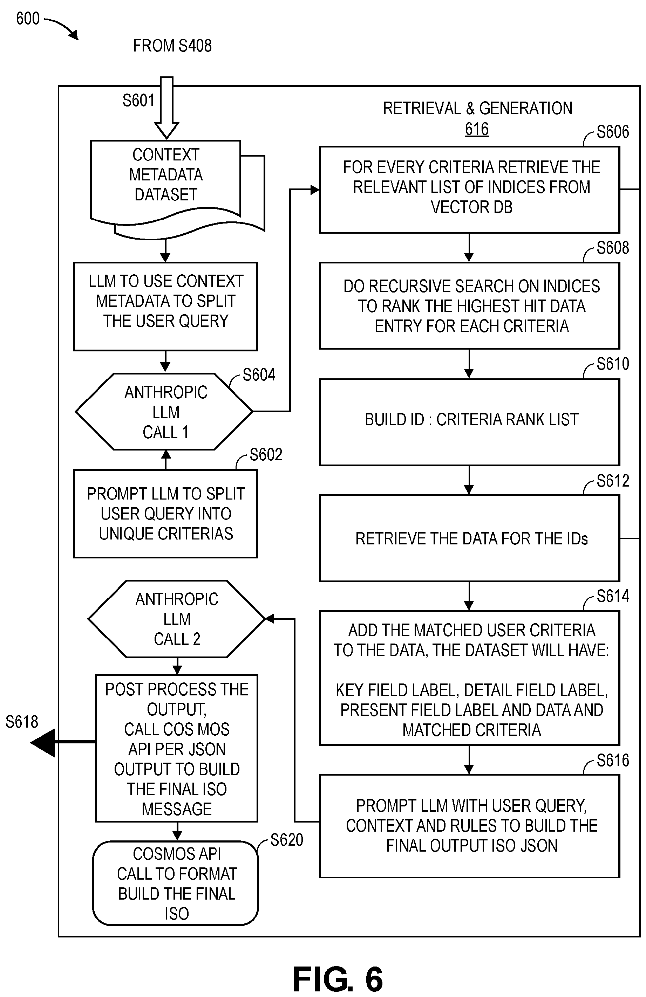

FIG. 6 is a flow chart illustrating a process 600 for retrieval and generation according to some embodiments. The process 600 may be performed by a server computer as illustrated in FIGS. 1 and 2. The retrieval and generation module 616 of FIG. 6 may correspond to the indexing and vectorization module 212 of FIG. 2. The process 600 may correspond to steps S120 - S134 of FIG. 1.

At step S601, a context metadata dataset is retrieved. As described above with respect to FIG. 1, the context metadata can include a set of key-value pairs, where the keys include the categories in the dataset and the values include corresponding data elements in the dataset (e.g., *Dₓ* described above with respect to step S116).

At step S602, a prompt is provided to the LLM to use the context metadata to split the user query, in LLM call 1 as shown in FIG. 6. For example, the LLM is provided a prompt including instructions, the context metadata, and the original user query.

At step S604, the LLM outputs a list of criteria or keywords identified in the user query. For example, as described above with respect to FIG. 1, the LLM uses the context metadata to identify different requested keywords, such as "melanoma" and "biopsy" from a user query related to a medical dataset. Such data elements may correspond to data categories such as "diagnosis" and "test" that are also established in the context metadata.

At step S606, for every criterion or keyword, the relevant list of indices is retrieved from the vector DB. Continuing with the above example, the indexes of several entries in the dataset that include the data elements "melanoma" and/or "biopsy" are identified. Each of these entries may have an associated index that is identified by executing a search on the database (e.g., the vector DB described above).

At step S608, a recursive search is executed on the indices to rank the highest hit data entry for each criterion or keyword. For example, the indexed data entries are analyzed to identify the entry or entries that include the most of the requested data elements. Continuing with the above example, the index of any entries that include both "melanoma" and "biopsy" would be returned.

At step S610, a list mapping identifiers to criteria ranks is built. The list may specify the identifiers of the highest-ranked criteria or keywords, along with the rank number.

At step S612, the data corresponding to the identifiers is retrieved. This can be retrieved from the labeled DB using the key-value pairs therein in some instances. Alternatively, or additionally, underlying data from the raw dataset can be retrieved.

At step S614, the matched user criteria are added to the dataset. The dataset will have key field labels, detail field labels, present field labels, and matched user criteria.

At step S616, the LLM is prompted with the user query, context, and rules to build the final output ISO JSON. This is the anthropic LLM call 2 shown in Fig. 6.

At step S618, the output is post processed and the final ISO message is built. This may involve calling the COSMOS API as shown at S620.

FIG. 7 is a schematic diagram illustrating field categories and metadata as used in the techniques described herein. The field categories may include key fields 702, detail fields 704, and present fields 706. The examples shown in FIG. 7 are for instances in which the data is related to ISO transaction data, although it should be understood that these field categories can be applied for other data types.

The key fields 702 are defined as shown in 702A, being the highest category of field corresponding to crucial labels in the dataset, such as common keywords users search for. For example, as shown in FIG. 7, the key fields include common keywords user search for when generating ISO test cases.

The key fields 702 are stored in association with metadata 702B. This metadata 702B can include categories such as transaction profile descriptions, account funding sources, acquirer BINs, issuer country codes, and merchant types.

The detail fields 704 are fields that give meaning or context to the key fields 702. As shown in 704A, the detail fields can include non-key fields, non-zero value fields, and/or fields with extra description that could be helpful in forming the dataset. The detail field metadata 704B can include cryptogram version numbers or CVNs, POS terminal types, account reference codes, fund sources, and/or the like.

The present fields 706 are other fields present in the dataset. As shown in 706A, the present fields can include various fields that do not fall under the criteria for key fields 702 or detail fields 704, such as non-meaningful fields. The present field metadata 706B can include acquirer institution ID codes, track 2 data, retrieval reference numbers, and/or the like.

The techniques provided herein improve the efficiency and accuracy of the RAG process. More accurate and useful results are provided by virtue of the specialized context provided to the LLM. Further improvements are provided by splitting the raw user query and generating relevant keywords for the precise similarity search of arguments. Augmentation of key-value pairs to form new unique keys for embedding and mapping to data indexes makes the data labels far more precise than using prior techniques. Moreover, performing similarity search on the unique embedded keys and keywords reduces hallucinations.

This customized meta-data context severely reduces the context size of the LLM calls when the process seeks LLM guidance to evaluate and break down the user query into multiple targeted criteria. In traditional approaches, the LLM context for large datasets (e.g., an ISO library of metadata describing each and every ISO field along with the meanings) would overflow the LLM context limits, thus barring the ability to assess and break down the user query into keywords. The approach described herein binds the context within the scope of the intelligence fed to the LLM to ensure relevant and precise context for the LLM. By reducing the size of the LLM context, not only is the quality of the LLM output improved, but issues such as long convergence times and high power usage can also be mitigated by virtue of providing a more manageable and useful input to the LLM.

Any of the software components or functions described in this application may be implemented as software code to be executed by a processor using any suitable computer language such as, for example, Java, C, C++, C#, Objective-C, Swift, or scripting languages such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such storage or transmission devices.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g., a hard drive, a CD, or an entire computer system), and may be present on or within different computer products within a system or network. A computer system may include a monitor, printer, or other suitable display for providing any of the results mentioned herein to a user.

The above description is illustrative and is not restrictive. Many variations of the invention will become apparent to those skilled in the art upon review of the disclosure. The scope of the invention should, therefore, be determined not with reference to the above description, but instead should be determined with reference to the claims along with their full scope or equivalents.

One or more features from any embodiment may be combined with one or more features of any other embodiment without departing from the scope of the invention.

As used herein, the use of "a," "an," or "the" is intended to mean "at least one," unless specifically indicated to the contrary.

## Claims

1. A computer-implemented method comprising:
receiving (S120), by a server computer, a natural language query that specifies a plurality of categories and data elements;
providing (S126), by the server computer to a Large Language Model (LLM), a first prompt comprising the received natural language query and context metadata characterizing the categories and the data elements in a dataset;
outputting (S128), by the LLM, a plurality of keywords identified in the natural language query based on the context metadata;
identifying (S130), by the server computer, one or more entries in the dataset that contain data elements corresponding to one or more of the plurality of keywords;
providing (S132), by the server computer to the LLM, a second prompt comprising the received natural language query, the keywords, and one or more indexes to the one or more identified entries in the dataset; and
outputting (S134), by the LLM, a generated output that is based on the one or more identified entries in the dataset.

2. The computer-implemented method of claim 1, wherein identifying the one or more entries in the dataset that contain data elements corresponding to one or more of the plurality of keywords comprises:
executing K-Nearest Neighbor (KNN) to identify the one or more entries in the dataset.

3. The computer-implemented method of either claim 1 or claim 2, wherein:
the one or more entries includes two or more entries corresponding to two or more of the plurality of keywords; and
the method further comprises:
ranking the two or more entries based on the presence of the two or more of the plurality of keywords; and
selecting at least a highest-ranked entry, the index of which is then provided to the LLM.

4. The computer-implemented method of claim 3, wherein the ranking comprises executing a recursive search on the indexes and the keywords.

5. The computer-implemented method of any preceding claim, further comprising:
causing display of the generated output on a display component of a remote computing device; or
causing speech output to be played via a speaker component of a remote computing device.

6. The computer-implemented method of any preceding claim,
wherein the context metadata comprises a set of key-value pairs, where the keys include categories in the dataset, and the values include corresponding data elements in the dataset.

7. The computer-implemented method of claim 6, further comprising:
receiving (S112), by the server computer, raw data;
parsing (S114), by the server computer, the raw data to identify categories and data elements therein; and
generating (S116), by the server computer, the dataset, including mapping the categories to the data elements in the key-value pairs.

8. The computer-implemented method of claim 7, wherein the raw data comprises hexadecimal data.

9. The computer-implemented method of either claim 7 or claim 8, wherein the raw data comprises International Organization for Standardization (ISO) 8583 data.

10. The computer-implemented method of any of claims 7 to 9, wherein the raw data is a regression bucket that holds historical data corresponding to at least one of transaction data, medical data, or browser history.

11. The computer-implemented method of any of claims 6 to 10, further comprising:
generating, by the server computer, supplemental keys paired to the index of the corresponding data entry to generate supplemental key-value pairs;
vectorizing, by the server computer, the supplemental key-value pairs; and
storing, by the server computer, the vectorized supplemental key-value pairs,
where the server computer uses the stored vectorized supplemental key-value pairs to prepare the second query.

12. A server computer (200) comprising:
one or more processors (204); and
one or more computer readable media (208) comprising code executable by the one or more processors to perform the method of any preceding claim.

13. A non-transitory computer-readable medium (208) comprising instructions that, when executed by one or more processors (204), cause performance of the method of any of claims 1 to 11.
